# FASCICULE DE BREVET EUROPEEN

(11) **EP 3 638 475 B1**
(45) Date de publication et mention de la délivrance du brevet: **11.08.2021**
(21) Numéro de dépôt: 18773498.3
(22) Date de dépôt: 12.06.2018
(51) Int. Cl.: B28C 7/16, B28B 1/00, B28B 3/22, B28C 5/12, B33Y 30/00, B01F 5/04, B01F 7/00, B01F 15/02, E04G 21/04

(54) **SYSTÈME D'EXTRUSION DE CORDONS DE MATÉRIAU CIMENTAIRE POUR ROBOT DE FABRICATION ADDITIVE DE STRUCTURES ARCHITECTURALES**
SYSTEM ZUM EXTRUDIEREN ZEMENTARTIGER MATERIALSCHICHTEN FÜR EINEN ROBOTER ZUR GENERATIVEN FERTIGUNG VON ARCHITEKTURSTRUKTUREN
SYSTEM FOR EXTRUDING CEMENTITIOUS MATERIAL LAYERS FOR AN ARCHITECTURAL STRUCTURE ADDITIVE MANUFACTURING ROBOT

(30) Priorité: 14.06.2017 FR 1755380
(43) Date de publication de la demande: 22.04.2020
(73) Titulaire: Xtreee, 94623 Rungis Cedex (FR)
(72) Inventeur: ROUX, Philippe, 94623 Rungis Cedex (FR); MALLET, Alban, 94623 Rungis Cedex (FR); BOUYSSOU, Charles, 94623 Rungis Cedex (FR); AKHAVAN ZAKERI, Mahriz, 94623 Rungis Cedex (FR); BLANCHET, Laurent, 94623 Rungis Cedex (FR); MOREL, Philippe, 94623 Rungis Cedex (FR); GOSSELIN, Cl ment, 94623 Rungis Cedex (FR); GAUDILLIERE, Nadja, 94623 Rungis Cedex (FR); DUBALLET, Romain, 94623 Rungis Cedex (FR)
(74) Mandataire: Bringer IP
(86) Numéro de dépôt international: PCT/FR2018/051370
(87) Numéro de publication internationale: WO 2018/229418

(56) Documents cités:
- WO-A1-2016/166116
- CN-A- 105 216 333
- CN-U- 204 354 263
- CN-U- 205 840 350
- GB-A- 2 267 110
- JP-A- H04 269 299

## Description

### 1. Domaine technique de l'invention

L'invention concerne la fabrication additive de matériaux cimentaires. L'invention concerne plus particulièrement un système d'extrusion de cordons de matériau cimentaire pour robot de fabrication additive de structures architecturales. L'invention concerne également un robot équipé d'un tel système de fabrication additive de structures architecturales.

### 2. Arrière-plan technologique

L'impression 3D de matériaux cimentaires est une branche de la fabrication additive de matériaux cimentaires, dont les applications apparaissent nombreuses et prometteuses dans le domaine de l'architecture et de la construction.

En effet, l'impression 3D des matériaux cimentaires semble pouvoir apporter de nombreux avantages par rapport aux techniques traditionnelles parmi lesquels notamment la possibilité de pouvoir réaliser des formes complexes par ajout de couches successives de matériaux cimentaires, la rapidité des opérations de construction, la réduction des coûts et de la main d'œuvre, une sécurité améliorée sur les chantiers, etc.

La maitrise de l'impression 3D de matériaux cimentaires fait appel à des compétences dans le domaine de la mécanique des fluides, la mécanique, l'électronique et le génie civil.

Dans tout le texte, les termes « structures architecturales » désignent à la fois des éléments de construction individuels (pont, pilier, mur, mobilier urbain, etc.), des structures complètes (bâtiment, maison, immeuble, etc.) et des pièces architecturales diverses (œuvres artistiques, sculptures, etc.).

L'extrusion de matériau cimentaire destinée à la fabrication d'une structure architecturale met en œuvre une tête d'impression cimentaire comprenant une entrée de matériau cimentaire et une buse de sortie de matériau cimentaire, et un circuit d'alimentation de la tête d'impression en matériau cimentaire comprenant un réservoir de stockage de matériau cimentaire, une conduite reliant le réservoir de stockage et l'entrée de la tête d'impression, et une pompe de gavage de la conduite par le matériau cimentaire issu du réservoir de stockage.

L'une des difficultés de l'impression 3D de matériaux cimentaires réside dans le fait que le matériau cimentaire doit être fourni dans un état rhéologique compatible avec un pompage de ce matériau, c'est à dire suffisamment fluide pour pouvoir être pompé du réservoir de stockage et véhiculé vers la buse de sortie, alors que son état doit être assez visqueux (c'est à dire moins fluide) en aval de la buse de sortie pour pouvoir former une couche autoportante et susceptible de supporter la couche suivante.

Il existe d'ores et déjà quelques systèmes d'impression cimentaire comme celui décrit dans CN 105 216 333 A, qui divulgue le préambule de la revendication 1. Cela étant, il s'avère que les systèmes proposés ne permettent pas notamment la présence de porte-à-faux trop importants dans le produit imprimé (la construction réalisée) sauf à ralentir fortement les opérations d'impression, ce qui crée des discontinuités, ou à ajouter des renforts temporaires, ce qui ralentit et complexifie l'impression. L'une des raisons des difficultés des solutions antérieures tient dans le fait que le matériau cimentaire est placé dans un état proche de sa limite de pompage tout en présentant un seuil de cisaillement suffisant pour ne pas s'affaisser. Cette contrainte sur le matériau implique une contrainte forte sur la vitesse d'impression de la pièce fabriquée en limitant le débit et la vitesse du robot, et limite ainsi la complexité de la pièce produite à la résistance du matériau extrudé.

### 3. Objectifs de l'invention

Les inventeurs ont donc cherché à proposer un système d'extrusion de matériau cimentaire qui permet de résoudre au moins certains des inconvénients des solutions antérieures avec l'objectif de pouvoir fournir des pièces complexes sans impacter les performances d'impression.

En particulier, les inventeurs ont cherché à fournir une solution qui permet la mise en œuvre d'un matériau cimentaire semblable à celui qui est coulé dans le cadre des techniques traditionnelles (notamment en terme de résistance) sans néanmoins nécessiter la présence de moule ou de coffrage.

L'invention vise aussi à fournir, dans au moins un mode de réalisation, un système d'extrusion de matériau cimentaire qui permet de fabriquer des pièces architecturales ou de construction complexes.

L'invention vise également à fournir, dans au moins un mode de réalisation, un système d'extrusion qui permet une dépose continue et uniforme du matériau.

L'invention vise aussi à fournir, dans au moins un mode de réalisation de l'invention, un système d'extrusion qui permet l'impression de pièces présentant des porte-à-faux sans néanmoins imposer un ralentissement de la vitesse d'impression.

L'invention vise aussi à fournir, dans au moins un mode de réalisation de l'invention, un système d'extrusion qui permet la fabrication de pièces architecturales ou de construction de manière précise, stable, répétable et à moindre coût.

L'invention vise aussi à fournir un robot équipé d'un système d'extrusion cimentaire selon l'invention.

### 4. Exposé de l'invention

Pour ce faire, l'invention concerne un système d'extrusion de cordons de matériau cimentaire pour robot de fabrication additive de structures architecturales comprenant :
- une tête de dépose de cordons de matériau cimentaire, dite tête d'impression, comprenant une bouche d'entrée de matériau cimentaire et une buse de sortie configurée pour former des cordons de matériau cimentaire,
- un circuit d'alimentation en matériau cimentaire de ladite tête d'impression comprenant un réservoir de stockage de matériau cimentaire, une conduite reliant ledit réservoir de stockage et ladite tête d'impression, et une pompe de gavage de ladite conduite d'alimentation en matériau cimentaire issu dudit réservoir de stockage,
- un capteur de pression/débit dudit matériau cimentaire circulant dans ladite tête d'impression adapté pour transmettre des mesures de pression/débit à ladite pompe de gavage, ladite pompe de gavage étant configurée pour asservir le gavage de la conduite d'alimentation auxdites mesures transmises par ledit capteur.

Un système selon l'invention est caractérisé en ce que ladite tête de dépose comprend en outre :
- une enceinte de mélange agencée en amont de ladite buse de sortie et dans laquelle débouche un dispositif d'adjuvantation adapté pour pouvoir injecter des adjuvants modifiants les caractéristiques du matériau cimentaire avant éjection desdits cordons de matériau cimentaire par ladite buse de sortie,
- un mélangeur dynamique configuré pour pouvoir mélanger ledit matériau cimentaire et lesdits adjuvants fournis par ledit dispositif d'adjuvantation dans ladite enceinte de mélange,
- une pompe de dosage à vis excentrée configurée pour pouvoir véhiculer le matériau cimentaire de la bouche d'entrée de la tête d'impression vers ladite enceinte de mélange.

Un système selon l'invention permet donc de véhiculer le matériau cimentaire du réservoir de stockage jusqu'à la tête d'impression tout en contrôlant et maitrisant le débit et la pression du matériau cimentaire. L'invention permet donc de maintenir la pression du matériau cimentaire dans une plage prédéterminée de valeurs à l'entrée dans la tête d'impression, par exemple entre 2 et 6 bars. Cette maitrise de la pression et du débit du matériau cimentaire dans la tête d'impression permet une dépose continue et uniforme des cordons de matériau cimentaire par la buse de sortie. Il est donc possible avec un système selon l'invention d'obtenir rapidement des pièces complexes sans imposer de contraintes particulières sur le matériau, si ce n'est la pression et le débit du matériau cimentaire qui alimente la buse de la tête d'impression. L'asservissement de la pompe de gavage permet en outre de corriger les éventuelles imperfections géométriques d'extrusion des cordons.

En outre, un système d'extrusion selon l'invention comprend un dispositif d'adjuvantation relié à ladite tête d'impression en amont de ladite buse de sortie de manière à pouvoir injecter des adjuvants modifiant les caractéristiques du matériau cimentaire avant éjection desdits cordons du matériau cimentaire par ladite buse de sortie.

Un tel système permet donc de modifier les propriétés du matériau cimentaire par l'ajout d'adjuvants en amont de la buse de sortie de manière à pouvoir adapter le matériau cimentaire éjecté de la buse de sortie au besoin de la structure architecturale à fabriquer. Il est donc possible avec un système selon l'invention de véhiculer le matériau cimentaire jusqu'à la tête d'impression dans un état compatible avec un pompage optimisé et de ne modifier ses propriétés physiques (par exemple sa rhéologie, sa force tensioactive, sa plasticité, sa stabilité, sa thixotropie, etc.) uniquement avant la dépose de la couche en sortie de buse.

Il est donc possible avec un système selon l'invention de déposer des couches de matériau cimentaire en sortie de buse qui présentent des caractéristiques proches du matériau cimentaire mis en œuvre dans le cadre des techniques traditionnelles de construction.

En d'autres termes, un système selon l'invention permet d'utiliser en entrée de système (le réservoir de stockage) un matériau cimentaire dans un premier état rhéologique, de convoyer ce matériau de manière contrôlée jusqu'à la tête d'impression, elle même destinée à être fixée à un système de positionnement d'impression 3D, tel qu'un bras articulé, et à altérer l'état rhéologique du matériau au cours de ce convoyage par l'ajout d'adjuvants. Ainsi, le système selon l'invention permet de contrôler et de maitriser l'état du matériau (rhéologie, débit, pression) en sortie de la tête d'impression.

En outre, la tête d'impression comprend une enceinte de mélange associée à un mélangeur dynamique permettant de mélanger le matériau cimentaire et les adjuvants de manière homogène en amont de la buse de sortie. Le matériau cimentaire est conduit vers l'enceinte de mélange par une pompe de dosage à vis excentrée, ce qui permet de véhiculer le matériau vers l'enceinte à débit constant, sans générer de pulsations. En outre, cette pompe permet de réduire les éventuelles pulsations créées par la pompe de gavage.

Avantageusement et selon l'invention, la pompe de gavage est une pompe à vis excentrée de manière à limiter les pulsations dans la conduite d'alimentation.

Cela étant dans d'autres modes de réalisation, la pompe de gavage peut être une pompe péristaltique, une pompe à piston, et de manière générale toute pompe adaptée pour véhiculer un matériau cimentaire et être asservie en pression/débit.

Avantageusement et selon l'invention, ledit mélangeur dynamique comprend au moins un arbre s'étendant longitudinalement dans l'enceinte de mélange, et portant des doigts radiaux répartis le long de l'arbre, et un moteur configuré pour pouvoir entrainer cet arbre en rotation de manière à pouvoir fournir un mélange homogène du matériau cimentaire et des adjuvants.

Un système selon cette variante avantageuse permet d'obtenir un mélange homogène du matériau cimentaire et des adjuvants. La présence de doigts radiaux répartis le long de l'arbre du mélangeur permet de distribuer de manière égale les particules de matériau dans l'enceinte de mélange. Selon une variante, le mélangeur comprend deux bras parallèles, chaque bras comprenant des doigts radiaux, de manière à former un organe du type « batteur à oeufs ». Le moteur du mélangeur peut être commandé de manière à inverser son sens de rotation du/des axes pendant l'impression.

Avantageusement et selon l'invention, ledit dispositif d'adjuvantation comprend au moins une aiguille d'adjuvantation débouchant dans ladite enceinte de mélange selon une direction d'adjuvantation formant avec ladite direction longitudinale un angle compris entre 0 et 90° - de préférence de 45° - , et reliée à un fût d'adjuvants de manière à pouvoir injecter lesdits adjuvants dudit fût d'adjuvants dans ladite enceinte de mélange selon ladite direction d'adjuvantation.

Selon cette variante, les adjuvants sont ajoutés au matériau cimentaire dans l'enceinte de mélange suivant une direction d'adjuvantation qui forme avec la direction longitudinale un angle prédéterminé. Cette direction longitudinale est la direction de l'arbre du mélangeur et la direction d'écoulement du matériau cimentaire dans l'enceinte de mélange. Cette injection d'adjuvants suivant cette direction d'adjuvantation permet d'obtenir rapidement un mélange homogène du matériau cimentaire et des adjuvants. Une adjuvantation à 90°, c'est à dire une adjuvantation radiale qui favorise le mélange des adjuvants avec le matériau cimentaire circulant au voisinage de l'axe central de l'enceinte de mélange. Une adjuvantation proche de 0° favorise le mélange des adjuvants avec le matériau circulant au voisinage des parois de l'enceinte de mélange. Une adjuvantation à 45° est un bon compromis entre les deux angles précédemment décrits.

Avantageusement et selon cette variante, ledit dispositif d'adjuvantation comprend une pluralité d'aiguilles débouchant selon la direction d'adjuvantation dans ladite enceinte de mélange, chaque aiguille étant reliée audit fût d'adjuvants par l'intermédiaire d'un doseur volumétrique.

Selon cette variante, une pluralité d'aiguilles injecte les adjuvants dans l'enceinte de mélange selon ladite direction d'adjuvantation, ce qui permet une distribution homogène des adjuvants dans le matériau cimentaire. De préférence, les aiguilles sont agencées au voisinage de la partie amont de l'enceinte de mélange, c'est à dire à l'opposé de la buse de sortie. Chaque aiguille est reliée au fût d'adjuvants par l'intermédiaire d'un doseur volumétrique, ce qui permet de contrôler le débit d'adjuvant injecté dans l'enceinte de mélange. Ainsi, le matériau cimentaire est conduit dans l'enceinte de mélange avec un débit constant, contrôlé par la pompe de gavage asservie en pression/débit et les adjuvants sont conduits vers l'enceinte de mélange avec un débit constant contrôlé par les doseurs volumétriques. De préférence, chaque doseur volumétrique est relié à l'aiguille par l'intermédiaire d'un raccord de verrouillage du type Luer, plus connu sous la dénomination anglaise de « luer-lock ».

Avantageusement et selon l'invention, ledit dispositif d'adjuvantation comprend une pompe péristaltique agencée entre le fût d'adjuvants et lesdits doseurs volumétriques.

La présence d'une pompe péristaltique permet d'améliorer le pompage des adjuvants, en particulier dans le cas d'une distance importante, par exemple supérieure à 5 mètres, entre le fût d'adjuvants et les aiguilles du dispositif d'adjuvantation. Bien entendu, cette distance à partir de laquelle un doseur volumétrique est préférable dépend du type de doseur volumétrique, du circuit d'adjuvantation et de la différence de hauteur entre le fût d'adjuvants et des aiguilles.

Avantageusement, un système d'extrusion selon l'invention comprend un capteur de pression dudit matériau cimentaire en amont de l'enceinte de mélange, dit capteur de sécurité, configuré pour mesurer la pression en amont de ladite enceinte de mélange de manière à pouvoir prévenir des risques de bouchage de l'enceinte de mélange ou de la buse de sortie.

Avantageusement et selon l'invention, le réservoir de stockage dudit circuit d'alimentation est une trémie comprenant une ouverture supérieure de réception de gâchées de matériaux cimentaires et une sortie inférieure reliée à ladite conduite d'alimentation.

Une trémie permet de recevoir aisément des gâchées de matériaux cimentaires apportées par un opérateur. Une trémie permet également d'être aisément alimentée par un dispositif de fabrication du matériau cimentaire qui est agencé au-dessus de la trémie.

Avantageusement et selon cette variante, ladite trémie est équipée d'un agitateur comprenant un arbre portant une pluralité de pales latérales, et un moteur de mise en rotation de l'arbre de manière à pouvoir remuer le matériau cimentaire de ladite trémie.

L'agitateur permet de maintenir le matériau cimentaire dans un état rhéologique quasi-constant avant pompage par la pompe de gavage. En d'autres termes, cette trémie agitatrice forme un réservoir tampon pouvant recevoir différentes gâchées de matériau cimentaire. Une trémie présente une forme conique qui permet de conserver l'historique des gâchées.

Avantageusement, un système d'extrusion selon l'invention présente une section constante depuis la pompe de gavage jusqu'à la buse de sortie de manière à pouvoir véhiculer le matériau cimentaire sans générer de zones de perturbation.

L'invention concerne également un robot de fabrication additive de structures architecturales comprenant un système de positionnement, tel qu'un bras articulé, piloté par une unité de commande, caractérisé en ce qu'il comprend un système d'extrusion de matériau cimentaire selon l'invention.

Un tel robot comprend un système d'extrusion selon l'invention dont la tête d'impression est portée par un système de positionnement, tel qu'un bras articulé, lui-même piloté par un ordinateur.

L'invention concerne également un système d'extrusion et un robot d'impression additive caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique fonctionnelle d'un système d'extrusion selon un mode de réalisation de l'invention,
- la figure 2 est une vue schématique fonctionnelle d'un dispositif d'adjuvantation d'un système d'extrusion selon un mode de réalisation de l'invention,
- la figure 3 est une vue schématique fonctionnelle d'une tête d'impression d'un système d'extrusion selon un mode de réalisation de l'invention,
- les figures 4a et 4b sont des vues schématiques partielles d'aiguilles d'un dispositif adjuvantation qui débouchent dans une enceinte de mélange d'un système d'extrusion selon un mode de réalisation de l'invention,
- la figure 5 est une vue schématique en coupe d'une portion de l'enceinte de mélange d'un système d'extrusion selon un mode de réalisation de l'invention.

### 6. Description détaillée d'un mode de réalisation de l'invention

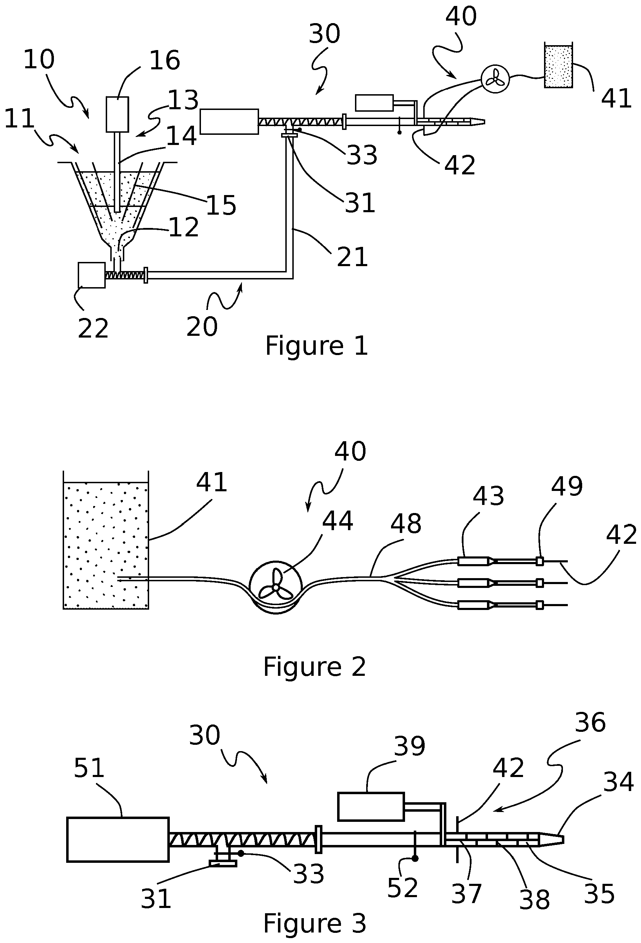

Sur les figures, les échelles et les proportions ne sont pas strictement respectées et ce, à des fins d'illustration et de clarté. Dans toute la description détaillée qui suit en référence aux figures, sauf indication contraire, chaque élément du système d'extrusion est décrit tel qu'il est agencé lorsque le système d'extrusion est dans la configuration de la figure 1.

En outre, les éléments identiques, similaires ou analogues sont désignés par les mêmes références dans toutes les figures.

Un système d'extrusion selon le mode préférentiel de réalisation de l'invention, tel que représenté sur la figure 1, comprend un réservoir de stockage 10 de matériau cimentaire, une tête d'impression 30, un circuit 20 d'alimentation en matériau cimentaire de la tête d'impression agencé entre le réservoir de stockage 10 et la tête d'impression 30, et un dispositif d'adjuvantation 40 relié à la tête d'impression 30.

Chacun des différents organes du système vont maintenant être décrits en détail.

### Réservoir de stockage

Le réservoir de stockage 10 est de préférence une trémie comprenant une ouverture supérieure 11 adaptée pour recevoir des gâchées de matériaux cimentaires et une sortie inférieure 12 reliée au circuit 20 d'alimentation. La trémie comprend en outre un agitateur 13 comprenant un arbre 14 portant une pluralité de pales latérales 15 par l'intermédiaire d'axes perpendiculaires à l'arbre 14, et un moteur 16 de mise en rotation de l'arbre 14. Le moteur 14 est par exemple un moteur électrique configuré pour pouvoir entrainer à faible vitesse, par exemple à une vitesse de 6 tours/minute, l'arbre 14 de l'agitateur 13. L'utilisation d'un moteur thermique est bien sûr possible sans modifier les performances du système d'extrusion selon l'invention. Le rôle de l'agitateur est de pouvoir maintenir le matériau cimentaire dans la trémie à un état rhéologique quasi-constant avant d'être conduit vers la tête d'impression par le circuit 20 d'alimentation.

Le matériau cimentaire utilisé est par exemple un prémix à base de ciment avec des particules fines, hydraté et fluidifié

### Circuit d'alimentation

Le circuit d'alimentation 20 relie le réservoir de stockage 10 à la tête d'impression 30. Ce circuit comprend une conduite 21 reliant la sortie 12 du réservoir de stockage 10 à une bouche d'entrée 31 de la tête d'impression 30. Le circuit d'alimentation 20 comprend en outre une pompe de gavage 22. Cette pompe de gavage 22 est asservie en pression/débit par un capteur de pression 33 agencé au voisinage de la bouche d'entrée 31 de la tête d'impression 30. Cette pompe de gavage 22 est par exemple une pompe à vis excentrée de manière à pouvoir véhiculer le matériau cimentaire vers la tête d'impression 30 en minimisant les pulsations. Cette pompe de gavage 22 est par exemple une pompe commercialisée sous les références Putzmeister® FP-V Mono. Bien entendu, d'autres pompes peuvent être utilisés sans modifier les performances de l'invention. Le capteur 23 de pression/débit peut-être de tous types connus. Il s'agit par exemple d'un capteur commercialisé sous la référence ifm® PF2953. Bien entendu, d'autres capteurs peuvent être utilisés sans modifier les performances de l'invention. La pompe de gavage 22 est configurée pour suivre une loi d'asservissement prédéterminée et paramétrable par un opérateur en fonction des besoins. Par exemple, la loi d'asservissement est paramétrée pour maintenir la pression du matériau cimentaire entre 2 et 6 bars.

### Tête d'impression

La tête d'impression 30 comprend, tel que représenté sur la figure 3, une bouche d'entrée 31 reliée au circuit d'alimentation 20 et une buse 34 de sortie configurée pour former des cordons de matériau cimentaire.

La tête d'impression comprend en outre une enceinte de mélange 35 agencée en amont de la buse 34 de sortie et dans laquelle débouche le dispositif d'adjuvantation 40, décrit ci-après. L'enceinte de mélange 35 est équipée d'un mélangeur dynamique 36 adapté pour pouvoir mélanger le matériau cimentaire et les adjuvants fournis par le dispositif d'adjuvantation 40.

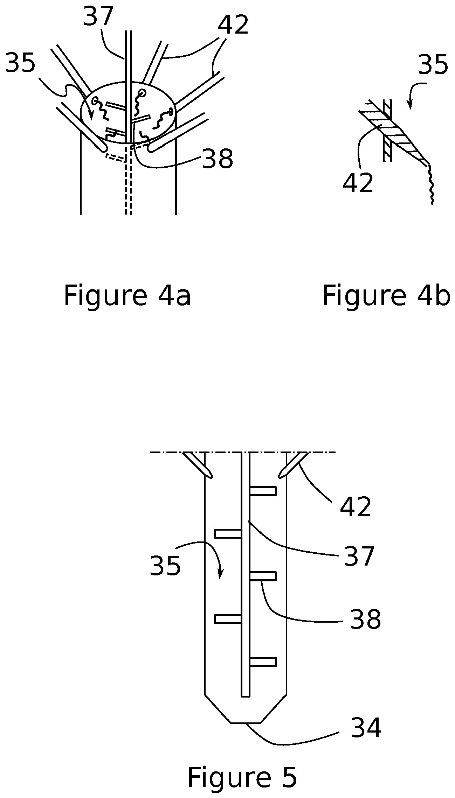

Le mélangeur dynamique 36 comprend, tel que représenté partiellement sur les figures 4a et 5, un arbre 37 s'étendant longitudinalement dans l'enceinte de mélange 35 sur lequel sont montés des doigts radiaux 38 répartis le long de l'arbre 37. Le mélangeur dynamique 36 comprend également un moteur 39 configuré pour pouvoir entrainer l'arbre 37 en rotation de manière à pouvoir fournir un mélange homogène du matériau cimentaire et d'adjuvants. Ce moteur 39 peut être un moteur électrique, un moteur thermique, et de manière générale tous types de moteurs. Selon le mode de réalisation des figures, le moteur 39 est déporté par rapport à l'arbre 37 pour limiter au maximum la perturbation du mélange dans l'enceinte de mélange 35.

La tête d'impression 30 comprend également une pompe de dosage 51 à vis excentrée configurée pour pouvoir véhiculer le matériau cimentaire de la bouche d'entrée 31 vers l'enceinte de mélange 35. Une telle pompe de dosage est par exemple une pompe commercialisée sous les références Viscotec® 3VMP36. Bien entendu, d'autres pompes peuvent être utilisées sans modifier les performances de l'invention.

Selon un autre mode de réalisation non représenté sur les figures, la pompe de dosage 51 est remplacée par un doseur volumétrique configuré pour pouvoir assurer un débit constant sur une plage prédéterminée de fonctionnement.

La tête d'impression 30 comprend également un capteur de pression 52 de sécurité agencé en amont de l'enceinte de mélange 35. Ce capteur est par exemple un capteur commercialisé sous les références ifm® PF2953. Bien entendu, d'autres capteurs peuvent être utilisés sans modifier les performances de l'invention. Ce capteur 52 de sécurité permet de mesurer le pression en amont de l'enceinte de mélange 35 de manière à pouvoir prévenir des risques de bouchage de l'enceinte de mélange 35 ou de la buse de sortie 34. Ce capteur peut par exemple être relié à un système d'arrêt automatique du système d'extrusion dès qu'un seuil de pression est atteint.

La buse de sortie 34 de la tête d'impression est de préférence démontable de manière à pouvoir adapter la forme de la buse de sortie 34 à la pièce à fabriquer. En particulier, la section de la buse de sortie 34 peut être adaptée à chaque type de pièce fabriquée, voir changée en cours d'impression pour modifier la section des cordons de certaines zones de la pièce fabriquée. Pour ce faire, la buse de sortie comprend par exemple une paroi externe filetée qui coopère avec une portion interne filetée de la paroi de la tête d'impression délimitant l'enceinte de mélange 35. Selon une autre variante, la buse de sortie comprend une paroi interne filetée qui coopère avec une portion externe filetée de la paroi de la tête d'impression.

### Dispositif d'adjuvantation

Le dispositif d'adjuvantation 40, comprend tel que représenté sur la figure 2 un fût 41 contenant une pluralité d'adjuvants, des aiguilles 42 reliées au fût 41 par l'intermédiaire de tuyaux 48, de doseurs volumétriques 43 et d'une pompe péristaltique 44. Les doseurs volumétriques sont par exemple les doseurs commercialisés sous la référence Viscotec® eco-PEN600. Bien entendu, d'autres doseurs peuvent être utilisés sans modifier les performances de l'invention. Les adjuvants du fût 41 d'adjuvants peuvent être de tous types. Il s'agit d'adjuvants visant à modifier n'importe quelle propriété physique du matériau cimentaire (principalement sa rhéologie, mais également sa force tensioactive, sa plasticité, sa stabilité, sa thixotropie, etc.).

Les aiguilles 42 débouchent dans l'enceinte de mélange 35, à l'opposée de la buse de sortie 34, suivant une direction d'adjuvantation, qui forme par exemple un angle de 45° avec la direction principale de l'enceinte de mélange.

L'adjuvantation est donc réalisée par l'intermédiaire des doseurs volumétriques qui permettent que les adjuvants soient pompés sous forme liquide dans le fût 41 et conduits à une pression constante dans l'enceinte de mélange 35. Chaque doseur volumétrique 43 est relié à une aiguille 42 de précision par l'intermédiaire d'un dispositif du type luer-lock 49. L'agencement des aiguilles 42 selon une direction d'adjuvantation qui forme de préférence un angle de 45° avec la direction principale de l'enceinte de mélange, qui est la direction d'écoulement du matériau cimentaire, permet d'obtenir un mélange homogène du matériau cimentaire et des adjuvants. Ainsi, le matériau cimentaire à débit constant, obtenu par le biais de la pompe de gavage asservie en pression est mis en contact avec les adjuvants à débit constant, obtenu par le biais des doseurs volumétriques. Le mélangeur dynamique de la tête d'impression permet d'homogénéiser les deux fluides en contact.

L'invention concerne également un robot de fabrication additive de structures architecturales comprenant un système de positionnement de la tête d'impression, qui est par exemple un bras articulé piloté par une unité de commande. Le robot comprend donc un système d'extrusion de matériau cimentaire selon l'invention et est configuré pour déplacer la tête d'impression du système d'extrusion. Le robot n'est pas représenté sur les figures, mais est bien connu de l'homme du métier. La particularité d'un robot selon l'invention est qu'il met en œuvre un système d'extrusion selon l'invention. Pour ce faire, le système de positionnement tel qu'un bras articulé du robot porte la tête d'impression d'un système d'extrusion selon l'invention et tel que représenté sur la figure 3. Cette tête d'impression est reliée à un dispositif d'adjuvantation et au circuit d'alimentation et au réservoir de stockage d'un système d'extrusion selon l'invention.

Le robot est par exemple un robot six axes, monté sur rails ou non, sur portique ou non. Le robot peut également être un robot à câbles ou tous types de robots dont le système de positionnement, tel qu'un bras articulé, peut être piloté par ordinateur.

Un robot selon l'invention peut être utilisé pour fabriquer tous types de pièces architecturales. Une telle pièce architecturale peut être une pièce de renfort, un bâtiment, et de manière générale, toute pièce en matériau cimentaire. Les pièces architecturales fabriquées par l'utilisation d'un système d'extrusion selon l'invention peuvent être d'échelles variées. Il peut s'agir d'une portion de poteau, d'un poteau entier, d'un mur, d'un élément de dalle, d'un bâtiment, d'un mobilier urbain, d'une sculpture, etc.

## Revendications

1. Système d'extrusion de cordons de matériau cimentaire pour robot de fabrication additive de structures architecturales comprenant :
- une tête de dépose de cordons de matériau cimentaire, dite tête d'impression (30), comprenant une bouche d'entrée (31) de matériau cimentaire et une buse de sortie (34) configurée pour former des cordons de matériau cimentaire,
- un circuit d'alimentation (20) en matériau cimentaire de ladite tête d'impression (30) comprenant un réservoir de stockage (10) de matériau cimentaire, une conduite (21) d'alimentation en matériau cimentaire reliant ledit réservoir de stockage (10) et ladite tête d'impression (30), et une pompe de gavage (22) de ladite conduite (21) d'alimentation en matériau cimentaire issu dudit réservoir de stockage (10),
- un capteur (33) de pression/débit dudit matériau cimentaire circulant dans ladite tête d'impression (30) adapté pour transmettre des mesures de pression/débit à ladite pompe de gavage (22), ladite pompe de gavage (22) étant configurée pour asservir le gavage de la conduite (21) d'alimentation auxdites mesures transmises par ledit capteur (33).
**caractérisé en ce que** ladite tête de dépose comprenant en outre :
- une enceinte de mélange (35) agencée en amont de ladite buse de sortie (34) et dans laquelle débouche un dispositif d'adjuvantation (40) adapté pour pouvoir injecter des adjuvants modifiant les caractéristiques du matériau cimentaire avant éjection desdits cordons de matériau cimentaire par ladite buse de sortie (34),
- un mélangeur dynamique (36) configuré pour pouvoir mélanger ledit matériau cimentaire et des adjuvants fournis par ledit dispositif d'adjuvantation (40) dans ladite enceinte de mélange (35),
- une pompe de dosage (51) à vis excentrée configurée pour pouvoir véhiculer le matériau cimentaire de ladite bouche d'entrée (31) de ladite tête d'impression vers ladite enceinte de mélange (35).

2. Système d'extrusion selon la revendication 1, **caractérisé en ce que** ledit mélangeur dynamique (36) comprend au moins un arbre (37) s'étendant dans l'enceinte de mélange (35) selon une direction, dite direction longitudinale, et portant des doigts radiaux (38) répartis le long de l'arbre (37), et un moteur (39) configuré pour pouvoir entrainer cet arbre (37) en rotation de manière à pouvoir fournir un mélange homogène du matériau cimentaire et des adjuvants.

3. Système d'extrusion selon la revendication 2, **caractérisé en ce que** ledit dispositif d'adjuvantation (40) comprend au moins une aiguille (42) d'adjuvantation débouchant dans ladite enceinte de mélange (35) selon une direction d'adjuvantation formant avec ladite direction longitudinale un angle compris entre 0 et 90°, et reliée à un fût (41) d'adjuvants de manière à pouvoir injecter lesdits adjuvants dudit fût d'adjuvants dans ladite enceinte de mélange (35) selon ladite direction d'adjuvantation.

4. Système d'extrusion selon la revendication 3, **caractérisé en ce que** ledit dispositif d'adjuvantation (40) comprend une pluralité d'aiguilles (42) débouchant dans ladite enceinte de mélange (35) selon ladite direction d'adjuvantation, chaque aiguille (42) étant reliée audit fût (41) d'adjuvant par l'intermédiaire d'un doseur volumétrique (43).

5. Système d'extrusion selon la revendication 4, **caractérisé en ce que** ledit dispositif d'adjuvantation (40) comprend une pompe (44) péristaltique agencée entre le fût (41) d'adjuvants et lesdits doseurs volumétriques (43).

6. Système d'extrusion selon l'une des revendications 1 à 5, **caractérisé en ce qu'**il comprend un capteur de pression dudit matériau cimentaire en amont de l'enceinte de mélange, dit capteur de sécurité (52), configuré pour mesurer le pression en amont de ladite enceinte de mélange (35) de manière à pouvoir prévenir des risques de bouchage de l'enceinte de mélange (35) ou de la buse de sortie (34).

7. Système d'extrusion selon l'une des revendications 1 à 6, **caractérisé en ce que** ladite pompe de gavage (22) est une pompe à vis excentrée de manière à limiter les pulsations dans ladite conduite (21) d'alimentation.

8. Système d'extrusion selon l'une des revendications 1 à 7, **caractérisé en ce que** ledit réservoir de stockage (10) dudit circuit d'alimentation est une trémie comprenant une ouverture supérieure (11) de réception de gâchées de matériaux cimentaires et une sortie inférieure (12) reliée à ladite conduite (21) d'alimentation.

9. Système d'extrusion selon la revendication 8, **caractérisé en ce que** ladite trémie est équipée d'un agitateur (13) comprenant un arbre (14) portant une pluralité de pales (15) latérales, et un moteur (16) de mise en rotation de l'arbre (14) de manière à pouvoir remuer le matériau cimentaire de ladite trémie.

10. Système d'extrusion selon l'une des revendications 1 à 9, **caractérisé en ce qu'**il présente une section constante depuis la pompe de gavage (22) jusqu'à la buse de sortie (34) de manière à pouvoir véhiculer le matériau cimentaire sans générer de zones de perturbation.

11. Robot de fabrication additive de structures architecturales comprenant un système de positionnement, tel qu'un bras articulé, piloté par une unité de commande, **caractérisé en ce qu'**il comprend un système d'extrusion de matériau cimentaire selon l'une des revendications 1 à 10.

## Patentansprüche

1. System zum Extrudieren von Strängen aus zementartigem Material für einen Roboter, der für die additive Herstellung architektonischer Strukturen verwendet wird, umfassend:
- einen als Druckkopf (30) bezeichneten Kopf zum Ausgeben von Strängen aus zementartigem Material, der eine Mündung (31) für den Einlass von zementartigem Material und eine Auslassdüse (34) umfasst, die dazu bestimmt ist, Stränge aus zementartigem Material zu bilden,
- einen Kreislauf (20) zum Zuführen von zementartigem Material zu dem Druckkopf (30), der einen Vorratstank (10) für zementartiges Material, eine Zuführleitung (21) für zementartiges Material, die den Vorratstank (10) und den Druckkopf (30) verbindet, und eine Pumpe (22) zum Füllen der Zuführleitung (21) mit zementartigem Material aus dem Vorratstank (10) umfasst
- einen Sensor (33) zum Erfassen des Drucks/der Fließgeschwindigkeit des in dem Druckkopf (30) strömenden zementartigen Materials, worin der Sensor geeignet ist, Druck-/Fließgeschwindigkeitsmessungen an die Füllpumpe (22) zu übertragen, worin die Füllpumpe (22) derart ausgelegt ist, dass sie das Füllen des Zufuhrrohrs (21) auf der Grundlage der von dem Sensor (33) übertragenen Messungen steuert,
**dadurch gekennzeichnet, dass** der Dosierkopf ferner umfasst
- eine Mischkammer (35), die stromaufwärts der Auslassdüse (34) angeordnet ist und in die eine Zumischvorrichtung (40) mündet, die geeignet ist, vor dem Ausstoßen der Stränge des zementartigen Materials durch die Auslassdüse (34) Beimengungen einzuspritzen, die die Eigenschaften des zementartigen Materials modifizieren,
- einen dynamischen Mischer (36), der derart ausgestaltet ist, dass er das zementartige Material und die von der Beimischungsvorrichtung (40) bereitgestellten Zusatzmittel in der Mischkammer (35) mischen kann
- eine Exzenterschnecken-Dosierpumpe (51), die derart gestaltet ist, dass sie das zementartige Material von der Einlassöffnung (31) des Druckkopfes zu der Mischkammer (35) fördern kann.

2. Extrusionssystem nach Anspruch 1, **dadurch gekennzeichnet, dass** der dynamische Mischer (36) umfasst, mindestens eine Welle (37), die sich in die Mischkammer (35) in einer als Längsrichtung bezeichneten Richtung erstreckt, und die sich radial erstreckende Finger (38) trägt, die entlang der Welle (37) verteilt sind, und einen Motor (39), der derart ausgestaltet ist, dass er die Welle (37) drehen kann, um eine homogene Mischung aus dem zementartigen Material und den Beimengungen bereitstellen zu können.

3. Extrusionssystem nach Anspruch 2, **dadurch gekennzeichnet, dass** die Zumischvorrichtung (40) mindestens eine Zumischnadel (42) umfasst, die in die Mischkammer (35) in einer Zumischrichtung führt, die einen Winkel zwischen 0 und 90° mit der Längsrichtung bildet und mit einem Zumischfass (41) verbunden ist, um die Zumischungen aus dem Zumischfass in die Mischkammer (35) in der Zumischrichtung einspritzen zu können.

4. Extrusionssystem nach Anspruch 3, **dadurch gekennzeichnet, dass** die Zumischvorrichtung (40) eine Vielzahl von Nadeln (42) umfasst, die in die Mischkammer (35) in der Zumischrichtung führen, wobei jede Nadel (42) mittels eines volumetrischen Zuführers (43) mit dem Zumischfass (41) verbunden ist.

5. Extrusionssystem nach Anspruch 4, **dadurch gekennzeichnet, dass** die Zumischvorrichtung (40) eine peristaltische Pumpe (44) umfasst, die zwischen dem Mischzylinder (41) und den volumetrischen Zuführungen (43) angeordnet ist.

6. Extrusionssystem nach einem der Ansprüche 1 bis 5, **dadurch gekennzeichnet, dass** es einen Sensor zur Erfassung des Drucks des zementhaltigen Materials stromaufwärts der Mischkammer umfasst, der als Sicherheitssensor (52) bezeichnet wird und dazu bestimmt ist, den Druck stromaufwärts der Mischkammer (35) zu erfassen, um die Gefahr des Verstopfens der Mischkammer (35) oder der Austrittsdüse (34) verhindern zu können.

7. Extrusionssystem nach einem der Ansprüche 1 bis 6, **dadurch gekennzeichnet, dass** die Füllpumpe (22) eine Exzenterschneckenpumpe ist, um die Pulsationen in der Zuführleitung (21) zu begrenzen.

8. Extrusionssystem nach einem der Ansprüche 1 bis 7, **dadurch gekennzeichnet, dass** der Vorratstank (10) des Zuführkreislaufs ein Trichter ist, der eine obere Öffnung (11) zur Aufnahme von Chargen zementartiger Materialien und einen unteren Auslass (12) aufweist, der mit dem Zuführrohr (21) verbunden ist.

9. Extrusionssystem nach Anspruch 8, **dadurch gekennzeichnet, dass** der Trichter mit einem Rührwerk (13) versehen ist, das eine Welle (14), die eine Vielzahl von seitlichen Schaufeln (15) trägt, und einen Motor (16) zum Drehen der Welle (14) umfasst, um das zementartige Material des Trichters rühren zu können.

10. Extrusionssystem nach einem der Ansprüche 1 bis 9, **dadurch gekennzeichnet, dass** es einen konstanten Querschnitt von der Füllpumpe (22) bis zur Auslassdüse (34) aufweist, um das zementartige Material ohne Erzeugung von Störzonen fördern zu können.

11. Roboter, der für die additive Herstellung von architektonischen Strukturen verwendet wird, und umfasst, ein Positionierungssystem, wie ein Gelenkarm, der von einer Steuereinheit gesteuert wird, **dadurch gekennzeichnet, dass** er ein System zum Extrudieren von zementartigem Material nach einem der Ansprüche 1 bis 10 umfasst.

## Claims

1. System for extruding strands of cementitious material for a robot used for the additive manufacturing of architectural structures, comprising:
- a head for dispensing strands of cementitious material, referred to as a print head (30), comprising a mouth (31) for the inlet of cementitious material and an outlet nozzle (34) designed to form strands of cementitious material,
- a circuit (20) for feeding cementitious material to said print head (30), comprising a cementitious material storage tank (10), a cementitious material feed pipe (21) connecting said storage tank (10) and said print head (30), and a pump (22) for filling said feed pipe (21) with cementitious material from said storage tank (10),
- a sensor (33) for detecting the pressure/flow rate of said cementitious material flowing in said print head (30), which sensor is suitable for transmitting pressure/flow rate measurements to said filling pump (22), said filling pump (22) being designed to control the filling of the feed pipe (21) on the basis of said measurements transmitted by said sensor (33),
**characterized in that** said dispensing head further comprises:
- a mixing chamber (35) which is arranged upstream of said outlet nozzle (34) and into which an admixing device (40) leads which is suitable for injecting admixtures that modify the characteristics of the cementitious material before ejection of said strands of cementitious material through said outlet nozzle (34),
- a dynamic mixer (36) designed to be able to mix said cementitious material and admixtures provided by said admixing device (40) in said mixing chamber (35),
- an eccentric-screw metering pump (51) designed to be able to convey the cementitious material from said inlet mouth (31) of said print head to said mixing chamber (35).

2. Extrusion system according to claim 1, **characterized in that** said dynamic mixer (36) comprises at least one shaft (37) extending into the mixing chamber (35) in a direction referred to as the longitudinal direction, and carrying radial fingers (38) distributed along the shaft (37), and a motor (39) designed to be able to rotate said shaft (37) so as to be able to provide a homogeneous mixture of the cementitious material and the admixtures.

3. Extrusion system according to claim 2, **characterized in that** said admixing device (40) comprises at least one admixing needle (42) which leads into said mixing chamber (35) in an admixing direction which forms an angle of between 0 and 90° with said longitudinal direction and is connected to an admixture barrel (41) so as to be able to inject said admixtures from said admixture barrel into said mixing chamber (35) in said admixing direction.

4. Extrusion system according to claim 3, **characterized in that** said admixing device (40) comprises a plurality of needles (42) leading into said mixing chamber (35) in said admixing direction, each needle (42) being connected to said admixture barrel (41) by means of a volumetric feeder (43).

5. Extrusion system according to claim 4, **characterized in that** said admixing device (40) comprises a peristaltic pump (44) arranged between the admixture barrel (41) and said volumetric feeders (43).

6. Extrusion system according to any of claims 1 to 5, **characterized in that** it comprises a sensor for detecting the pressure of said cementitious material upstream of the mixing chamber, referred to as a safety sensor (52), which is designed to measure the pressure upstream of said mixing chamber (35) so as to be able to prevent risks of the mixing chamber (35) or the outlet nozzle (34) clogging.

7. Extrusion system according to any of claims 1 to 6, **characterized in that** said filling pump (22) is an eccentric-screw pump so as to limit the pulsations in said feed pipe (21).

8. Extrusion system according to any of claims 1 to 7, **characterized in that** said storage tank (10) of said feed circuit is a hopper comprising an upper opening (11) for receiving batches of cementitious materials and a lower outlet (12) connected to said feed pipe (21).

9. Extrusion system according to claim 8, **characterized in that** said hopper is provided with an agitator (13) comprising a shaft (14) carrying a plurality of lateral blades (15), and a motor (16) for rotating the shaft (14) so as to be able to stir the cementitious material of said hopper.

10. Extrusion system according to any of claims 1 to 9, **characterized in that** it has a constant cross section from the filling pump (22) to the outlet nozzle (34) so as to be able to convey the cementitious material without generating disturbance zones.

11. Robot used for the additive manufacturing of architectural structures, comprising a positioning system, such as an articulated arm, controlled by a control unit, **characterized in that** it comprises a system for extruding cementitious material according to any of claims 1 to 10.
